**Europäisches Patentamt**

**European Patent Office**

**Office européen des brevets**

(19)

(11) Veröffentlichungsnummer : **0 168 589**
**B1**

(12) **EUROPÄISCHE PATENTSCHRIFT**

(45) Veröffentlichungstag der Patentschrift :
07.09.88

(21) Anmeldenummer : 85106070.7

(22) Anmeldetag : 17.05.85

(51) Int. Cl.⁴ : **G 01 N 27/56**

(54) **Sauerstoffmessfühler.**

(30) Priorität : 27.06.84 DE 3423590

(43) Veröffentlichungstag der Anmeldung :
22.01.86 Patentblatt 86/04

(45) Bekanntmachung des Hinweises auf die Patenterteilung : 07.09.88 Patentblatt 88/36

(84) Benannte Vertragsstaaten :
DE FR GB IT

(56) Entgegenhaltungen :
EP-A- 0 056 837
EP-A- 0 132 691
DE-A- 3 237 628
FR-A- 2 396 292
GB-A- 2 031 156
US-A- 4 199 423

(73) Patentinhaber : ROBERT BOSCH GMBH
Postfach 50
D-7000 Stuttgart 1 (DE)

(72) Erfinder : Bayha, Kurt
Albertstrasse 4
D-7141 Oberriexingen (DE)
Erfinder : Weyl, Helmut, Dipl.-Ing.
Peter-von-Koblenz-Strasse 34
D-7141 Schwieberdingen (DE)

## Beschreibung

### Stand der Technik

Die Erfindung geht aus von einem Sauerstoffmeßfühler nach dem ersten Teil von Anspruch 1. Es ist schon ein derartiger Sauerstoffmeßfühler bekannt (DE-A-2 729 475 = FR-A-2 396 292), bei dem in den Innenraum seines mit einem meßgasseitigen Boden versehenen Elektrolytrohres ein elektrischer Widerstandsheizkörper in Stabform hineinragt. Der stabförmige Heizkörper hat seitlich an seinem anschlußseitigen Endabschnitt elektrische Anschlußbereiche, auf welche radial drahtförmige Klemmkontakte drücken; diese Klemmkontakte stehen mit elektrischen Leitern in Verbindung, die zum Anschlußbereich des Sauerstoffmeßfühlers führen. Der genannte Stabheizkörper ist jedoch selbst als in Großserienfertigung hergestellte Handelsware relativ teuer, da der Materialbedarf verhältnismäßig groß ist und das Aufdrucken von metallischen Leiterbahnen auf die runde Oberfläche des Substrats kompliziert ist und die Fixierung und Halterung im Sauerstoffmeßfühler besonderer Obacht bedarf.

In der DE-A-3 237 628 wurde bereits ein Sauerstoffmeßfühler mit einem meßgasseits geschlossenen Festelektrolytrohr erwähnt, in dessen Innenraum ein plattenförmiger Heizkörper hineinragt; der Heizkörper hat ein keramisches Substrat, soll aber nicht befriedigen.

Vorbeschrieben wurden auch schon Sauerstoffsensoren mit einem Festelektrolytrohr, dessen meßgasseitiger Endabschnitt unverschlossen oder mit Bohrungen versehen ist (DE-B-2 654 892, JP-A/U-53-4987). Das Festelektrolytrohr derartiger Sauerstoffmeßfühler muß aber nicht vollständig aus Festelektrolytmaterial bestehen, es genügt, wenn der Meßbereich des Meßfühlers daraus hergestellt ist und darauf die Elektroden angeordnet sind (DE-B-2 817 350).

Weiterhin ist es bekannt, mit aufgedruckten und gesinterten Leiterbahnen versehene Substrate als elektrische Widerstandsheizelemente zu verwenden (US-A-3 694 627).

### Vorteile der Erfindung

Der erfindungsgemäße Sauerstoffmeßfühler mit den Merkmalen des Anspruchs 1 hat demgegenüber den Vorteil, daß der Heizkörper nicht nur in Form und Herstellung einfacher und billiger ist, sondern daß er im Sauerstoffmeßfühler auch problemloser einbaubar ist und sicherer fixiert und gehalten wird.

### Zeichnung

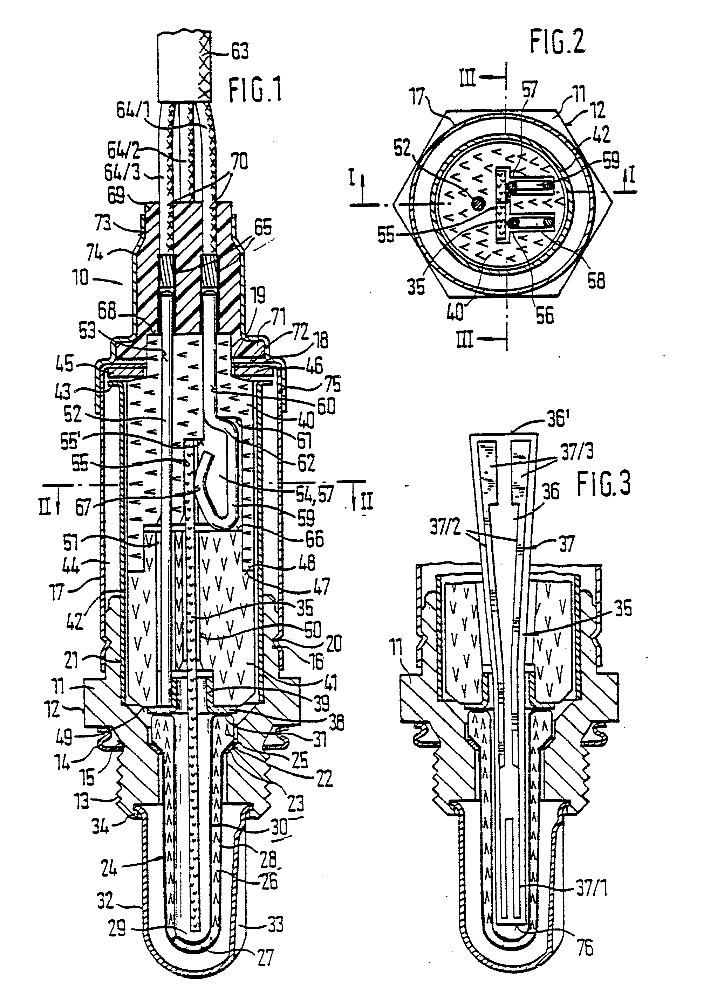

Ein Ausführungsbeispiel der Erfindung ist in der Zeichnung dargestellt und in der nachfolgenden Beschreibung näher erläutert. Es zeigen Figur 1 einen Längsschnitt durch einen erfindungsgemäßen, vergrößert dargestellten Sauerstoffsensor nach der Linie I-I in Figur 2, Figur 2 einen Querschnitt durch den erfindungsgemäßen Sauerstoffsensor nach der Linie II-II in Figur 1 und Figur 3 einen Längsschnitt durch den teilweise dargestellten Sauerstoffmeßfühler nach der Linie III-III in Figur 2.

### Beschreibung des Ausführungsbeispieles

Der in den Figuren 1 bis 3 der Zeichnung dargestellte Sauerstoffmeßfühler 10 hat ein metallisches Gehäuse 11 das an seiner Außenseite ein Schlüsselsechskant 12 und ein Gewinde 13 als Befestigungsmittel für den Einbau des Sauerstoffmeßfühlers 10 in ein nicht dargestelltes Meßgasrohr aufweist; für den abdichtenden Einbau dieses Gehäuses 11 in dem Meßgasrohr dient ein ringförmiges Dichtelement 14, das in einer zwischen Schlüsselsechskant 12 und Gewinde 13 angeordneten Ringnut 15 unverlierbar festgelegt ist. Auf dem meßgasfernen Endabschnitt des Gehäuses 11 ist noch eine Ringnut 16 eingearbeitet, die zur Festlegung einer das Gehäuse 11 verlängernden Verschlußhülse 17 dient; diese Verschlußhülse 17, welche meßgasfern einen Boden 18 mit einer zentralen Öffnung 19 hat, ist mittels mehrerer Einprägungen 20 in der Ringnut 16 des Gehäuses 11 festgelegt.

Das Gehäuse 11 hat eine Längsbohrung 21 mit einer Schulter 22, die der Meßseite des Sauerstoffmeßfühlers 10 abgewendet ist und ein ringförmiges Dichtelement 23 trägt. Auf dieser mit dem Dichtelement 23 versehenen Schulter 22 der Gehäuse-Längsbohrung 21 liegt ein Sensorelement 24 mit seinem Kopf 25 auf.

Dieses Sensorelement 24 ist im vorliegenden Beispiel ein an sich bekannter Sauerstoffmeßfühler, wie er aus der DE-U-8 101 584 bekannt ist und der bevorzugterweise für das Messen des Sauerstoffpartialdruckes in Abgasen Verwendung finden. Dieses Sensorelement 24 hat ein Festelektrolytrohr 26, dessen meßgasseitiger Endabschnitt mittels eines Bodens 27 verschlossen ist, das auf seiner dem Meßgas ausgesetzten Außenseite eine schichtförmige, gasdurchlässige Meßelektrode 28 und auf seiner im Innenraum 29 zugewendeten Seite eine einem Referenzgas (z. B. Luft) ausgesetzte, gasdurchlässige und schichtförmige Gegenelektrode (Bezugselektrode) 30 trägt. Während die Meßelektrode 28 über das ringförmige Dichtelement 23 mit dem elektrisch an Masse liegenden Gehäuse 11 in Berührung steht, führt die Gegenelektrode 30 bevorzugterweise von der Innenseite des Bodens 27 bis auf die meßgasferne Stirnfläche 31 des Festelektrolytrohres 26. Zur Erhöhung der Lebensdauer, der zumeist aus einer dünnen Platinschicht bestehenden Meßelektrode 28 ist diese mit einer (nicht dargestellten) gasdurchlässigen Schutzschicht überzogen, die beispielsweise aus Magnesiumspinell bestehen kann. Anstelle eines Festelektrolytrohres 26, das mit einem Boden 27 verschlossen ist, kann gegebenenfalls auch ein meßgasseits offenes Festelektrolytrohr Anwendung finden (z. B. DE-A-2 547 683, JP-A/U-53-4987). Verwendung kann auch ein sogenanntes Festelektrolytrohr finden, das nur im Meßbereich aus einem Festelektrolyten besteht (DE-B-2 817 350).

Das meßgasseits aus der Längsbohrung 21 des Gehäuses 11 herausragende Teil des Sensorelementes 24 ist mit Abstand von einem Schutzrohr 32 umgeben, welches für den Ein- und Austritt von Meßgasen Öffnungen 33 besitzt und am meßgasseitigen Ende des Gehäuses 11 durch eine Bördelung 34 oder ähnliches festgelegt ist ; dieses Schutzrohr 32 dient dazu, daß im Meßgas auftretende hohe Temperaturwechsel und im Meßgas enthaltene Partikel nicht direkt auf das Sensorelement 24 einwirken und zu Schäden führen.

In den Innenraum 29 des Festelektrolytrohres 26, dessen Durchmesser sich in Richtung Boden 27 des Festelektrolytrohres 26 in bevorzugter Weise etwas verjüngt, ragt der meßgasseitige Abschnitt eines Heizkörpers 35 ; dieser Heizkörper 35 besteht aus einem plättchenförmigen, elektrisch isolierenden Substrat 36 und auf dieses Substrat 36 aufgebrachte Leiterbahnen 37 ; das Substrat 36 kann beispielsweise aus Aluminiumoxid bestehen und ist derart gestaltet, daß sein anschlußseitiger Abschnitt breiter ist als sein in den Innenraum 29 des Festelektrolytrohres 26 hineinragender Abschnitt ; zumindest der anschlußseitige Abschnitt des Substrats 36 ist dabei im wesentlichen trapezförmig gestaltet, wobei die anschlußseitige Stirnseite 36' die große Grundlinie des Trapezes bildet. Das Substrat 36 ist etwa 0,8 mm dick. Die Leiterbahn 37 besteht bevorzugt aus einem Platinmetall, das ggf. mit keramischen Zusätzen versetzt ist, und ist auf das Substrat 36 durch Druck oder ähnliches aufgebracht und anschließend gesintert : anstelle eines Platinmetalls können aber auch andere geeignete Stoffe als Leiterbahnen 37 Verwendung finden und anstelle des Aufdruckens können auch andere geeignete bekannte Verfahren eingesetzt werden. Diese Leiterbahn 37 unterteilt sich 1.) in das auf dem meßgasseitigen Abschnitt des Substrats 36 aufgebrachte Heizelement 37/ 1, welches in seiner bevorzugten Ausführungsform als Mäander ausgebildet ist, 2.) die beiden Anschlußleiterbahnen 37/2, welche breiter sind als die einzelnen Stränge des Heizelementes 37/1 und bis zum anschlußseitigen Bereich des Substrats 36 hinaufführen, und 3.) die Anschlußbereiche 37/3, welche am anschlußseitigen Endabschnitt des Substrats 36 angeordnet, gegenüber den Anschlußleiterbahnen 37/2 noch weiter verbreitert und ggf. auch noch in der Dicke verstärkt sind. Die Verstärkung dieser Anschlußbereiche 37/3 der Leiterbahn 37 kann auch durch Auftragen eines anderen für diesen Zweck geeigneten Materials erfolgen, z. B. mittels einer Silberauflage. Diese Leiterbahn 37 kann ausschließlich ihrer beiden Anschlußbereiche 37/3 von einer dünnen Schutzschicht abgedeckt sein (nicht dargestellt), welche beispielsweise aus Magnesiumspinell bestehen kann. Aufgrund der anschlußseitigen Verbreiterung des Substrats 36 können die beiden Anschlußbereiche 37/3 mit einem solchen Abstand voneinander angeordnet werden, so daß auch für Ihre Kontaktierung genügend Raum zur Verfügung steht.

Auf der meßgasfernen Stirnfläche 31 des Sensorelementes 24, auf der die schichtförmige Gegenelektrode 30 endet, liegt ein ringförmiges Kontaktteil 38 auf, welches den plättchenförmigen Heizkörper 35 umgibt, dieses Kontaktteil 38 hat einen hülsenförmigen Schaft 39, der das Heizelement 35 ebenfalls umgibt und sich anschlußseits erstreckt.

In dem vom Sensorelement 24, dem Gehäuse 11 und der Verschlußhülse 17 begrenzten Raum sind zwei Isolierhülsen 40 und 41 untergebracht, welche bevorzugt aus einem keramischem Material (z. B. Aluminiumoxid) bestehen und mittels einer Führungshülse 42 koaxial- im Sauerstoffmeßfühler 10 gehalten sind. Die Führungshülse 42 ist meßgasseits in der Längsbohrung 21 des Gehäuses 11 festgelegt (z. B. durch Einpressen oder Verstemmen) und hat an ihrem meßgasfernen Ende einen nach außen weisenden Flansch 43, der seitlich bis nahe an die Verschlußhülse 17 reicht ; der zwischen dieser Führungshülse 42 und der Verschlußhülse 17 gebildete Ringraum 44 wirkt als Barriere gegenüber Feuchtigkeit, die im Bereich zwischen dem meßgasseitigen Endabschnitt der Verschlußhülse 17 und dem Gehäuse 11 mit der als Referenzgas dienenden Luft in den Sauerstoffmeßfühler 10 eintreten kann. Zwischen dem Flansch 43 der Fuhrungshülse 42 und dem Boden 18 der Verschlußhülse 17 ist ein ringförmiges Federelement 45 (Tellerfeder) angeordnet, das sich einerseits an dem Boden 18 der Verschlußhülse 17 abstützt und andererseits unter mechanischer Vorspannung auf einem koaxialen Absatz 46 der ersten Isolierhülse 40 aufliegt. Infolge der mechanischen Vorspannung dieses Federelementes 45 drückt die erste Isolierhülse 40 mit ihrer meßgasseitigen Stirnfläche 47 auf einen meßgasfernen Ringabsatz 48 der zweiten Isolierhülse 41 und demzufolge die meßgasseitige Stirnfläche 49 der zweiten Isolierhülse 41 auf das Kontaktteil 38, welches mit der Gegenelektrode 30 elektrisch in Verbindung steht.

Die zweite Isolierhülse 41 umfaßt mit einem Längsschlitz 50 den plättchenförmigen Heizkörper 35 und mit seinem meßgasnahen Endabschnitt dieses Längsschlitzes 50 den Schaft 39 des Kontaktteils 38. In einer achsparallel zum Längsschlitz 50 der zweiten Isolierhülse 41 verlaufenden Längsbohrung 51 ist ein Leiterdraht 52 entlanggeführt, welcher meßgasseits mittels eines bekannten Verfahrens (z. B. Schweißen) am Schaft 39 des Kontaktteils 38 befestigt ist ; der meßgasferne Abschnitt dieses Leiterdrahtes 52 ist durch eine in Längsrichtung durch die erste Isolierhülse 40 verlaufende Bohrung 53 geführt und steht aus dieser meßgasfern noch heraus.

In der meßgasseitigen Stirnfläche 47 der ersten Isolierhülse 40 ist eine Vertiefung 54 eingeformt, welche etwa in axialer Richtung eine bevorzugt ebene Anlagefläche 55 für den anschlußseitigen Endabschnitt des Heizkörpers 35 aufweist und mit einer meßgasseits weisenden Schulter 55′ versehen ist. An dieser Anlagefläche 55 liegt nun der anschlußseitige Endabschnitt des Heizkörpers 35 an, wobei die Stirnseite 36′ des Substrats 36 an der Schulter 55′ der Vertiefung 54 in der ersten Isolierhülse 40 anliegt. Zu dieser Vertiefung 54 zählen auch noch zwei bevorzugt senkrecht zu der Anlagefläche 55 angeordnete Führungsschlitze 56 und 57, welche ebenfalls in Längsrichtung der Isolierhülse 40 verlaufen und die der Aufnahme und Fixierung jeweils eines federnden Verbindungselementes (Klemmkontakte) 58 bzw. 59 dienen ; diese federnden Verbindungselemente 58, 59 sind bevorzugt aus einem metallischen Draht geformt, welcher meßgasseits haarnadelförmig gebogen ist. Die erste Isolierhülse 40 ist für die meßgasfernen Endabschnitte der Verbindungselemente 58 und 59 jeweils mit einem Durchgangsloch 60 versehen, welche meßgasseits in den entsprechenden Führungsschlitzen 56 und 57 einmünden und je eine meßgasseits weisende Schulter 61 bilden. Die meßgasfernen Endabschnitte der Verbindungselemente 58 bzw. 59 ragen meßgasfern aus der ersten Isolierhülse 40 heraus ; die meßgasnahen, aus den Durchgangslöchern 60 der ersten Isolierhülse 40 heraustretenden Abschnitte der Verbindungselemente 58 bzw. 59 sind in dem jeweiligen Führungsschlitz 56 bzw. 57 in der ersten Isolierhülse 40 Z-förmig nach außen gebogen und legen sich mit dieser Z-förmigen Abwinkelung 62 an der jeweiligen Schulter 61 an. Die Z-förmigen Abwinkelungen 62 der Verbindungselemente 58 bzw. 59 dienen als Sicherung gegen Zug-, Verdreh- und/oder Schüttelbeanspruchungen, die vom Anschlußkabel 63 mit seinen Anschlußdrähten 64/1 und 64/2 ausgehen. Die meßgasnahen Endabschnitte der Anschlußdrähte 64/1 und 64/2 sind mit den meßgasfernen, aus der ersten Isolierhülse 40 herausragenden Endabschnitten der Verbindungselemente 58 bzw. 59 mittels Verbindungshülsen 65 durch Verquetschen, Verschweißen und/oder Verlöten verbunden. Mit einer entsprechenden Verbindungshülse 65 ist auch der aus der ersten Isolierhülse 40 herausragende Endabschnitt des Leiterdrahtes 52 mit dem Anschlußdraht 64/3 des Anschlußkabels 63 verbunden ; dieser Anschlußdraht 64/3 dient also der Übertragung des von der Gegenelektrode 30 ermittelten Meßwertes. Jede der Z-förmigen Abwinkelungen 62 der federnden Verbindungselemente 58 und 59 verläuft meßgasseits bis zu einer Anschlagfläche 66, welche von der meßgasfernen Stirnfläche der zweiten Isolierhülse 41 gebildet ist. Die federnden Verbindungselemente 58, 59 legen sich dabei an der erwähnten Anschlagfläche 66 der zweiten Isolierhülse 41 an und führen in Richtung zur jeweiligen Z-förmigen Abwinkelung 62 des Verbindungselementes 58 bzw. 59 zurück. Die freien Endabschnitte der Verbindungselemente 58 und 59 sind mit jeweils einem Knick 67 versehen, mit denen sie auf dem zugehörigen Anschlußbereich 37/3 auf dem Heizkörper 35 unter mechanischer Vorspannung aufliegen ; im Bereich des Knicks 67 kann der Querschnitt des jeweiligen federnden Verbindungselementes 58, 59 derart abgeplattet sein, so daß der zwischen dem jeweiligen Knick 67 und dem jeweiligen Anschlußbereich 37/3 auftretende Druck zu keiner Beschädigung des Anschlußbereiches 37/3 führt. Anstelle einer Z-förmigen Abwinkelung 62 kann auch eine wellenförmige Abwinkelung Anwendung finden, um eine Sicherung gegen Zug- und/oder Schüttelbeanspruchungen des Kabels 63 zu bilden.

Auf der meßgasfernen Stirnfläche 68 der ersten Isolierhülse 40 stehen in bevorzugter Weise die meßgasseitigen Enden der Verbindungshülsen 65 und auch der meßgasseitige Endabschnitt eines elastischen Isolierstopfens 69 auf, welcher in Durchgangsbohrungen 70 die Verbindungshülsen 65 und Abschnitte der Anschlußdrähte 64/1 bis 64/3 fest und abdichtend umgibt. Das meßgasseitige Flanschteil 71 dieses Isolierstopfens 69 umgibt den durch die Öffnung 19 der Verschlußhülse 17 herausragenden Endabschnitt der ersten Isolierhülse 40 und steht mit seiner meßgasseitigen Stirnfläche 72 auf der Außenseite des Bodens 18 der Verschlußhülse 17 abdichtend auf ; auf der Mantelfläche 73 dieses Isolierstopfens 69 ist eine rohrförmige, vorzugsweise metallische Kopfhülse 74 angeordnet, die mit ihrem aufgeweiteten, meßgasseitigen Endabschnitt eng über den meßgasfernen Endabschnitt der Verschlußhülse 17 greift und an dieser Verschlußhülse 17 mittels einiger Schweißpunkte 75 oder anderer bekannter Befestigungsmittel festgelegt ist und den Isolierstopfen 69 in Längsrichtung des Sauerstoffmeßfühlers 10 unter mechanischer Vorspannung hält.

Es sei ergänzend darauf hingewiesen, daß der Heizkörper 35 mit schichtförmigen Heizelementen und den zugehörigen Anschlußleiterbahnen und Anschlußbereichen auch auf beiden Großflächen versehen sein kann ; in diesem Falle ist es von Vorteil, wenn die Verbindung der Heizelemente 37/1 über die meßgasseitige Stirnfläche 76 des Heizkörpers 35 verläuft.

Die erfindungsgemäße Lösung zur Anordnung und Ausführung des Heizkörpers 35 stellt eine besonders praktikable Lösung dar, welche darüber hinaus für eine Großserienfertigung sehr preisgünstig zu realisieren ist. Die Sauerstoffmeßfühler dieser Art sind insbesondere zur Bestimmung des Sauerstoffgehaltes in Abgasen von Brennkraftmaschinen und Ofenanlagen entwickelt worden.

**Patentansprüche**

1. Sauerstoffmeßfühler (10), insbesondere zur Bestimmung des Sauerstoffgehaltes in Abgasen von Brennkraftmaschinen und Ofenanlagen, mit einem Metallgehäuse (11), das Befestigungsmittel (12, 13, 14) für den Einbau in eine Meßgasleitung besitzt und eine abgestufte Längsbohrung (21) aufweist, die einen Längsabschnitt eines rohrförmigen Keramikteils (24, 25, 26) fest und abdichtend umfaßt, welches mindestens teilweise aus Sauerstoffionen leitendem Material besteht, meßgasseits mit einem Boden (27) verschlossen sein kann, auf seiner Außenseite eine poröse, schichtförmige, bevorzugterweise mit einer porösen Schutzschicht bedeckte Elektrode (28) trägt, die mit dem meßgasfernen Anschlußbereich des Sauerstoffmeßfühlers (10) in elektrischer Verbindung steht, auf seiner Innenseite eine schichtförmige, vorzugsweise poröse Gegenelektrode (30) aufweist, die ebenfalls mit dem meßgasfernen Anschlußbereich des Sauerstoffmeßfühlers (10) in elektrischer Verbindung steht, und in seinem Innenraum (29) einen elektrischen Heizkörper (35) enthält, der anschlußseits aus dem Innenraum (29) des Keramikteils (24, 25, 26) herausragt, außerhalb des Innenraumes (29) des Keramikteils (24, 25, 26) auch fixiert ist, ein auf dem Substrat (36) des Heizkörpers (35) aufgebrachtes, leiterbahnartiges Heizelement (37/1) und auch zum anschlußseitigen Abschnitt des Substrats (36) führende Anschlußleiterbahnen (37/2) aufweist und seitlich an seinem anschlußseitigen Abschnitt mindestens einen elektrischen Anschlußbereich (37/3) besitzt, auf welchen ein aufgrund mechanischer Vorspannung wirkendes Verbindungselement (58, 59) drückt, das in elektrischer Verbindung mit dem anschlußseitigen Bereich des Sauerstoffmeßfühlers (10) steht, dadurch gekennzeichnet, daß das Substrat (36) des Heizkörpers (35) ein elektrisch isolierendes Plättchen ist, welches an seinem anschlußseitigen Abschnitt breiter ist als an seinem in den Innenraum (29) des Festelektrolytrohres (26) hineinragenden Abschnitt und auf dessen anschlußseitigem Abschnitt die zum Heizelement (37/1) führenden Anschlußleiterbahnen (37/2) einen größeren Abstand voneinander haben als auf demjenigen Abschnitt des Substrats (36), der sich innerhalb des Innenraumes (29) des Festelektrolytrohres (26) befindet, und daß der anschlußseitige Abschnitt des Heizkörpers (35) mit seiner den Anschlußbereichen (37/3) gegenüberliegenden Seite an einer in Längsrichtung des Sauerstoffmeßfühlers (10) verlaufenden Anlagefläche (55) anliegt, und daß das mindestens eine unter mechanischer Vorspannung stehende Verbindungselement (58 bzw. 59) des Sauerstoffmeßfühlers (10) auf den flächenhaften elektrischen Anschlußbereich (37/3) drückt, der auf dem Substrat (36) des Heizkörpers (35) in Höhe der genannten Anlagefläche (55) angeordnet ist.

2. Sauerstoffmeßfühler nach Anspruch 1, dadurch gekennzeichnet, daß das Substrat (36) des Heizkörpers (35) zumindest in seinem anschlußseitigen Abschnitt die Form eines Trapezes hat.

## Claims

1. Oxygen sensor (10), in particular for determining the oxygen content in exhaust gases of internal-combustion engines and furnace installations, having a metal housing (11), which has fastening means (12, 13, 14), for fitting into a measuring gas line, and also has a stepped longitudinal bore (21), which encloses a longitudinal section of a tubular ceramic part (24, 25, 26) firmly and with sealing effect, which ceramic part consists at least partially of material conducting oxygen ions, may be closed on the measuring gas side by a base (27), bears on its outside a porous electrode (28) in layer form, preferably covered with a porous protective layer, and in electrical connection with the connection region remote from the measuring gas of the oxygen sensor (10), has on its inside a counterelectrode (30), in layer form and preferably porous, which is likewise in electrical connection with the connection region remote from the measuring gas of the oxygen sensor (10), and contains in its interior (29) an electric heating body (35), which protrudes on the connection side out of the interior (29) of the ceramic part (24, 25, 26), is also fixed outside the interior (29) of the ceramic part (24, 25, 26), has a conductor track-like heating element (37/1), applied to the substrate (36) of the heating body (35), and also connection conductor tracks (37/2) leading to the connection-side section of the substrate (36), and has at the sides on its connection-side section at least one electric connection region (37/3), against which a connecting element (58, 59) presses due to mechanical bias, which connecting element is in electrical connection with the connection-side region of the oxygen sensor (10), characterized in that the substrate (36) of the heating body (35) is an electrically insulating platelet, which is wider at its connection-side section than at its section protruding into the interior (29) of the solid electrolyte tube (26) and on whose connection-side section the connection conductor tracks (37/2) leading to the heating element (37/1) are a greater distance apart than on that section of the substrate (36) which is within the interior (29) of the solid electrolyte tube (26), and in that the connection-side section of the heating body (35) rests with its side opposite the connection regions (37/3) against a contact surface (55) running in longitudinal direction of the oxygen sensor (10), and in that the at least one mechanically biased connecting element (58 and 59) of the oxygen sensor (10) presses against the planar electric connection region (37/3) which is arranged on the substrate (36) of the heating body (35) on a level with the said contact surface (55).

2. Oxygen sensor according to Claim 1, characterized in that the substrate (36) of the heating body (35) has, at least in its connection-side section, the form of a trapezoid.

## Revendications

1. Détecteur d'oxygène (10), en particulier pour la détermination de la teneur en oxygène dans les gaz d'échappement de moteurs à combustion interne et les installations de fours, avec un carter en métal (11), qui possède des moyens de fixation (12, 13, 14) pour le montage dans une conduite de mesure de gaz et possède un alésage longitudinal (21) étagé, qui englobe de manière rigide et étanche une section longitudinale d'une partie en céramique (24, 25, 26) de forme tubulaire, qui se compose au moins partiellement d'un matériau conducteur pour les ions oxygène, qui peut être obturée avec un fond (27), du côté du gaz à mesurer, qui porte sur son côté extérieur une électrode (28) poreuse, en forme de couche, avantageusement recouverte d'une couche de protection poreuse, qui est en liaison électrique avec la zone de raccordement du détecteur d'oxygène (10), située de manière éloignée de gaz à mesurer, qui possède sur son côté intérieur une contre-électrode (30) en forme de couche et avantageusement poreuse, qui est également en liaison électrique avec la zone de raccordement du détecteur d'oxygène (10) située du côté éloigné du gaz à mesurer, contenant un corps de chauffage électrique (35), émergeant hors de l'enceinte intérieure (29) de la partie en céramique (24, 25, 26), du côté du raccordement et est également fixé à l'extérieur de l'enceinte intérieure (29) de la partie en céramique (24, 25, 26), qui possède un élément de chauffage (37/1) du genre d'une piste conductrice qui est appliquée sur le substrat (36) du corps de chauffage (35) et également des pistes conductrices de raccordement (37/2), conduisant à la section du substrat (36) située du côté du raccordement, et qui possède au moins une zone de raccordement (37/3) électrique latéralement à sa section de raccordement électrique, sur laquelle appuie un élément de liaison (58, 59) agissant sous une précontrainte mécanique, qui est en liaison électrique avec la zone du détecteur d'oxygène (10) située du côté du raccordement, caractérisé en ce que le substrat (36) du corps de chauffage (35) est une plaquette isolante électriquement, plus large en sa section située du côté du raccordement, que dans sa section émergeant dans l'espace intérieur (29) du tube à électrolyte solide (28) et possède en sa section située du côté du raccordement un écart plus important entre les pistes conductrices de raccordement qui mènent à l'élément de chauffage (37/1), qu'il ne l'est sur la section du substrat (36), qui se trouve à l'intérieur de l'enceinte annulaire (29) du tube à électrolyte solide (26) et que la section du corps de chauffage (35), située du coté du raccordement, appuie avec son côté opposé aux zones de raccordement (37/3), sur une surface d'appui (55) qui se développe dans la direction longitudinale de détecteur d'oxygène (10) et qu'au moins un élément de liaison (58, respectivement 59) du détecteur d'oxygène (10), placé sous précontrainte mécanique appuie sur la zone de raccordement électrique (37/3) plate, qui est disposée sur le substrat (36) du corps de chauffage (35), à hauteur de la surface d'appui (55) évoquée.

2. Détecteur d'oxygène selon la revendication 1, caractérisé en ce que le substrat (36) du corps de chauffage (35) possède au moins à sa section, située du côté du raccordement, la forme d'un trapèze.

FIG.1

FIG.2

FIG.3